# EUROPEAN PATENT APPLICATION

(11) **EP 4 606 683 A1**
(43) Date of publication of application: **27.08.2025**
(21) Application number: 24382175.8
(22) Date of filing: 20.02.2024
(51) Int. Cl.: B62D 47/00, B62D 31/00, B62D 61/12

(54) **TRANSPORT SYSTEM COMPRISING TWO VEHICLES AND METHOD FOR TRANSPORTING CARGO AND/OR PASSENGERS**

(71) Applicant: Doble Vehicle, SL, 28003 Madrid (ES)
(72) Inventor: TARAZONA LIZARRAGA, Jaime, 28400 Collado Villalba (ES)
(74) Representative: Torner, Juncosa I Associats, SL

(57) **Abstract**

It is disclosed a transport system comprising two vehicles, each vehicle comprising: a main axis and a secondary axis; the vehicle having a forward and a rearward moving direction; a control unit; wherein the vehicles are configured to operate in a standalone configuration, in which each vehicle operates independently from the other one, and in a combined configuration, in which the vehicles are rigidly connected to each other, thereby forming an aggregated vehicle, so that the main axes of the connected vehicles are arranged at distal ends of the aggregated vehicle; the control units of the vehicles being configured to operate them synchronously; and the control units of the vehicles being configured to adapt the power outputs and maximum speed of the vehicles depending on whether the vehicles operate in the standalone or in the combined configuration.

It is also disclosed a method for transporting cargo and/or passengers.

## Description

### Technical field

The present invention relates to a transport system comprising two vehicles and to a method for transporting cargo and/or passengers.

### Background of the Invention

Personal mobility is an important challenge that has not yet been efficiently solved, especially in most medium and large cities. Cars are still very popular, both for commuting to and from work as well as for leisure trips. However, the average occupancy of a car is often much lower than its actual passenger carrying capacity. As a result, there are more cars on the road, and also needing to be parked, than would be the case if cars were used closer to capacity.

Last mile delivery in medium and large cities is another problem that arises, especially with an ever increasing demand for online shopping, food delivery, etc., as large vehicles are efficient for transporting large quantities of goods from one logistics centre to another, but are not efficient for final delivery of goods, and even, may not be allowed to enter determined areas of a city due to, for example, traffic restrictions to large vehicles.

US 2002/0175248 A1 discloses a transportation system for use on a roadway having first and second lanes. The system has a lead vehicle adapted for travel at high speeds on the roadway and a passenger vehicle adapted for travel at high speeds on the roadway. This document also discloses means for coupling the passenger vehicle to the lead vehicle while the lead vehicle and the passenger vehicle are traveling at high speeds on the roadway so that the passenger vehicle travels with the lead vehicle on the roadway.

US 2010/0044998 A1 discloses an autonomous wheeled vehicle having a driver's cabin and a space for transporting passengers and/or objects, a coupling procedure, an uncoupling procedure, and a method of managing said vehicles, and also the resulting vehicle train. The vehicle disclosed by US 2010/0044998 A1 includes: a steering front axle; a retractable coupling system comprising a first portion situated at the front of the vehicle and a second portion situated at the rear of the vehicle, the first portion of one vehicle being suitable for cooperating with the second portion of another vehicle when the coupling system is extended, so as to connect the vehicles together by forming a coupling between them; and also protector means for protecting said coupling.

US 2011/0108334 A1 discloses a road vehicle comprising a communicating door in each of the front and rear transverse surfaces, a front part and a rear part of a separable connection which can be combined with that of another identical or similar vehicle respectively in front and behind to form a separable articulated connection for aligning the vehicles and obtaining a short distance between the vehicles, a projection in front or in the rear at the inter-vehicle passenger access, a course set point for the following vehicle using a system for directional control of the following vehicle.

EP 3277561 A1 discloses an apparatus and a system for: combining independent driving vehicles into a single assembly for condensed, efficient, variable capacity transportation on common routes; and for separating into independent vehicles for flexibility on diverse routes. Retractable coupling and mated coupling on opposing ends of the vehicles provide multiple degrees of freedom to accommodate misalignment during initial dynamic engagement, and lock as rigidly coupled assembly with zero degrees of freedom. Mating vehicles' doors open during transit, permitting inter-vehicle movement and consolidation of passengers in route to urban locales, and release of empty vehicles. On return, independent vehicles combine to dense passenger vehicles from urban locales for redistribution of passengers in individual vehicles that later separate for diverse destinations. Slaved vehicle systems allow one vehicle to control coupled vehicles' systems of retractable suspension, coordinated steering, power sharing. In the system disclosed by EP 3277561 A1 the front of the vehicles connects with the back of the preceding vehicle.

These systems known in the art do not effectively solve the problems of passenger and/or cargo transportation in modern cities, where large vehicles are usually not allowed to operate, especially on small streets or semi-pedestrian areas. The systems known in the art essentially operate as road trains and, thus, are not suitable for circulating on small streets or semi-pedestrian areas. Moreover, the systems known in the art are specially envisaged for transporting passengers and are not optimised for transporting cargo, in particular, are not optimised for the, so called, last mile delivery.

Additionally, the dynamics of the systems known in the art do not improve when two or more vehicles are connected to each other.

The object of the present invention is to provide a transport system and a method for transporting cargo and/or passengers which improve the transport systems known in the art and which are applicable to the transport of cargo and/or of passengers.

### Description of the Invention

The present invention concerns to a transport system comprising two vehicles, as defined in claim 1, wherein each vehicle comprises: a front end having a main axis and a rear end having a secondary axis of the vehicle, the main axis comprising two wheels and the secondary axis comprising at least one wheel; the vehicle having a forward moving direction and a rearward moving direction; at least one of the wheels of the vehicle being powered by at least one motor; at least the wheels of the main or of the secondary axes having steering capability; an energy source for powering the at least one motor; a passenger and/or a cargo area; a control unit for controlling the vehicle, and being configured to adapt the power output of the at least one motor and the maximum speed of the vehicle; a docking unit for being connected to a docking unit of another vehicle of the transport system; wherein the vehicles are configured to operate in a standalone configuration, in which each vehicle operates independently from the other one, and in a combined configuration, in which the vehicles are rigidly connected to each other, thereby forming an aggregated vehicle, by respective docking units so that the main axes of the connected vehicles are arranged at distal ends of the aggregated vehicle; in the combined configuration one of the vehicles being configured to move in a forward movement direction and the other vehicle being configured to move in a rearward movement direction, the control units of the vehicles being configured to operate them synchronously; and the control units of the vehicles being configured to adapt the power outputs and maximum speed of the vehicles depending on whether the vehicles operate in the standalone or in the combined configuration.

The transport system of the present invention allows to combine two vehicles, that may depart from the same or from a different location and may have a short wheelbase, into an aggregated vehicle that has a longer wheelbase and, thus, better stability and dynamics than each vehicle in their standalone configuration, thereby allowing faster speeds and greater comfort and safety, which is especially beneficial on high-speed roads, although these benefits are applicable to any kind of road. In contrast, in systems known in the art, the aggregated vehicle resulting from combining two or more vehicles do not have better dynamics than each individual vehicle.

Vehicles known in the art having a short wheelbase, do not have sufficient stability for high-speed driving, or at least not in a comfortable and safe manner. This problem is solved by the system object of the present invention.

When the vehicles operate in the standalone configuration, their shorter wheelbase, compared to the aggregated vehicle, and to most known vehicles, provides them with greater manoeuvrability, which is really advantageous when parking, especially in small parking spaces, driving in narrow streets, etc.

Additionally, by having a main axis and a secondary axis is possible to optimise the usable space inside the passenger and/or cargo area by allowing only the wheels on the main axis to have, for example, a suspension layout optimised for high-speed driving, and a simpler, space saver, suspension layout, optimised for low-speed driving, on the secondary axis. As in the aggregated vehicle, i.e. the combined configuration of the system, the main axes of the vehicles, which occupy more space, are located at the distal ends of the aggregated vehicle, this also has the advantage of increasing the available space in the aggregated vehicle, as the secondary axes of each vehicle, which in the aggregated vehicle are located approximately around its centre, occupy less space because they are smaller.

Moreover, the system of the present invention allows operation of the aggregated vehicle in shared parts of the route and operation of the vehicles in the standalone configuration in corresponding individual parts of the route, thereby having the advantages and flexibility of a vehicle of reduced dimensions, in particular, when travelling in city centres, and also the advantages of a vehicle of greater dimensions with longer wheelbases when travelling on roads, for example.

The aforementioned advantages of the transport system of the present invention are applicable to the transport of passengers, i.e. persons, and cargo, i.e. freight. In particular, both vehicles may be configured to transport passengers, both vehicles may be configured to transport cargo, one of the vehicles may be configured to transport both cargo and passengers, one vehicle may be configured to transport passengers and the other to transport cargo, etc.

According to the first aspect of the present invention, the wheels of the main and secondary axes may have steering capability, thereby allowing to increase the stability of the system when travelling at high speeds and to increase the manoeuvrability of the system when travelling at low speeds by virtually increasing or reducing the wheelbase of the vehicles. At high speeds, i.e. when the speed of the vehicles exceeds a certain threshold, all wheels rotate in the same direction, whereas at low speeds, i.e. when the speed of the vehicles is below a certain threshold, the wheels at the front end, i.e. main axis, rotate in one direction and the wheels at the rear end, i.e. secondary axis, rotate in the opposite direction. This applies to the standalone and to the combined configuration of the system.

According to the first aspect of the present invention, each vehicle may comprise a docking opening on its rear end and a closing unit for closing said docking opening when the vehicle is the standalone configuration and opening said docking opening when the vehicles are in the combined configuration thereby creating a single inner space of the aggregated vehicle. By opening and closing the docking opening when the system operates in the combined configuration it is possible to create a single inner space that, for example, allows all passengers of the vehicle to interact with each other. If more privacy is desired, said docking opening may remain closed thereby creating two separated inner spaces of the aggregated vehicle. For safety reasons, in the standalone configuration, the docking opening of each vehicle is preferably closed, although it could also be open or partially open. In embodiments wherein both vehicles are configured for transport of cargo, by opening said docking units it is possible to fit greater objects in the cargo area of the aggregated vehicle. This is particularly advantageous when loading objects that otherwise would not fit in the cargo area of one of the vehicles.

According to the first aspect of the present invention, each vehicle may further comprise a positioning unit for locating the vehicle, said positioning unit being operatively connected to the control unit of the vehicle, said control unit being configured to at least adapt the power output of the at least one motor and the maximum speed of the vehicle according to the regulations applicable to the location of the system, i.e. regulations applicable to the aggregated vehicle or to each of the vehicles operating in the standalone configuration. Besides a maximum speed of the vehicles, certain areas, especially semi-pedestrian areas of cities, may also limit the maximum power output of the vehicles that circulate therein. These features of the present invention allow the system, whether in the combined or in the standalone configuration, to adapt to the regulations applicable to its location.

According to the first aspect of the present invention, the docking unit may be arranged at the rear end of the vehicle, so that the vehicles are connected "back to back" when they operate in the combined configuration. Usually vehicles comprise, on their front end, headlights and sensors. Moreover, the windshield, as well as the entire front end, usually have an aerodynamic shape in order to reduce aerodynamic drag of the vehicle and, thus, increase its efficiency. All these factors make the connection "front to back", as known in the prior art, more complex and less efficient. Moreover, a "back to back" connection allows the main axes of the vehicles to be placed at the distal ends of the aggregated vehicle, thereby maximizing its wheelbase and, thus, maximizing its stability Moreover, this allows the aggregated vehicle to be equally efficient when moving towards the forward moving direction and the rearward moving direction. Although known vehicles are typically able to move in a forward and in a rearward moving direction, they are typically more efficient moving in the forward moving direction than in the rearward moving direction, which is typically reserved for manoeuvring and parking.

According to the first aspect of the present invention, the docking unit may comprise mechanical and/or electromagnetic locking means. Preferably, the docking unit comprises mechanical and electromagnetic locking means in order to have redundancy.

According to the first aspect of the present invention, each vehicle may have a maximum capacity of two passengers, so that the dimensions of each vehicle, and thus of the aggregated vehicle, are reduced, thereby allowing, among other benefits, driving on narrow roads, easier parking, etc. However, the vehicles of the present invention may also have a maximum capacity of more than two passengers.

According to the first aspect of the present invention, each vehicle may be configured to turn within a circle of 2 meters in diameter or less. Preferably, said circle is of 1.5, one and a half, meters in diameter or less. This allows the vehicle to turn on itself, similarly to a wheelchair, for example, thereby allowing the vehicle to turn in corridors, halls, walkways, etc. This is particularly advantageous, for example, in last mile delivery or in personal transportation of persons with reduced mobility.

According to the first aspect of the present invention, the energy source of each vehicle may be a fuel cell or an electric battery, and the at least one motor may be an electric motor.

According to the first aspect of the present invention, axes having more than one wheel, may be equipped with a differential. This applies to both the main axis and to the secondary axis.

According to the first aspect of the present invention, at least each wheel of the main axis may comprise a hub motor and/or the at least one wheel of the secondary axis may comprise a hub motor. A hub motor on each wheel allows independent control of each wheel, as well as better torque and speed regulation, which allows for smoother acceleration, enhanced traction control and shorter braking, among other benefits. Axes wherein the corresponding wheels are driven by a corresponding hub motor may lack a differential.

According to the first aspect of the present invention, the energy source of each vehicle may be an electric battery, and the control units of each vehicle may be configured to, in the combined configuration of the vehicles, determine the battery level of the battery of each vehicle, and transfer energy from the battery of one vehicle to the battery of the other vehicle, so that the battery of one of the vehicles can be charged using energy stored in the battery of the other vehicles. Typically the battery to be charged would be the one that is more discharged, but it would also be possible to charge, for example, the battery of the vehicle that will have to travel a longer distance, thereby providing enough range for travelling further.

According to the first aspect of the present invention, the at least one wheel of the secondary axis may be movable between an operative position in which is in contact with the ground and an inoperative position in which it is not in contact with the ground, so that the system can modify its number of axes. This can be achieved either by raising or lowering the at least one wheel of the secondary axis and/or by raising the ground clearance of the aggregated vehicle, for example, using an active suspension.

According to the first aspect of the present invention, the at least one wheel of the secondary axis may be configured to operate in its inoperative position when the vehicles operate in the combined configuration and to operate in its operative position when the vehicles operate in the standalone configuration, so that the aggregated vehicle can modify its number of axles. However, the at least one wheel of the secondary axis may also be configured to operate in its operative position when the vehicles operate in the combined configuration. A greater number of axles, among other benefits, reduces the forces that the docking units of the vehicles need to withstand. On the contrary, a lesser number of axles reduces the friction of the aggregated vehicle with the road and, thereby, increases its efficiency, among other benefits. Said at least one wheel of the secondary axis may be moved between the operative position and the inoperative position, and vice versa, one or more times during a certain route, depending on the needs of the aggregated vehicle.

According to the first aspect of the present invention, at least one of the vehicles may comprise a removable structure for supporting cargo, thereby allowing an increase of the load capacity of the vehicle.

According to the first aspect of the present invention, each vehicle may comprise a suspension system configured to allow tilting of the vehicles in the standalone and/or in the combined configuration. Said tilting is preferably a lateral tilting, i.e. the vehicle tilts towards one of the sides of the vehicle. By tilting the vehicles while turning, either in standalone or in combined configuration, stability of the vehicles is increasing, thereby allowing a greater cornering speed or an increased load capacity. Tilting of the vehicle may also be useful when unloading passengers and/or cargo from the vehicles, either in the combined or in the standalone configuration.

According to the first aspect of the present invention, each vehicle may have a wheelbase shorter than 1,500 mm. Preferably, each vehicle has a wheelbase shorter than 1,200 mm. More preferably, each vehicle has a wheelbase shorter than 1,000 mm. Even more preferably, each vehicle has a wheelbase shorter than 750 mm.

According to the first aspect of the present invention, at least one of the vehicle may comprise a base and a removable module, said removable module comprising the passenger and/or cargo area, and said base comprising the main axis, the secondary axis, the at least one motor, the energy source for said at least one motor and the docking unit. The control unit for controlling the vehicle may be comprised in the base and/or in the removable module.

According to a second aspect of the present invention, it is disclosed a method for transporting cargo and/or passengers, as defined in claim 10, the method comprising the steps of: providing two vehicles of a transport system according to the first aspect of the present invention; rigidly connecting one vehicle to the other vehicle so that they form an aggregated vehicle and operate in a combined configuration with the main axes of the vehicles being arranged at distal ends of the aggregated vehicle; adjusting at least the power output of the electric motors of the vehicles and their maximum speed to the combined configuration; travelling a first distance with the vehicles in the combined configuration so that one of the vehicles travels in a forward movement direction and the other vehicle travels in a rearward movement direction; reaching a first destination; disconnecting one vehicle from the other one; adjusting at least the power output of the electric motors of the vehicles and their maximum speed to their standalone configuration; travelling a second distance with one vehicle and a third distance with the other vehicle; reaching a second destination with one vehicle and a third destination with the other vehicle. The previously mentioned steps are preferably carried out in a successive manner. Said second and third destinations are preferably in different locations, although they can also be at the same location.

According to the second aspect of the present invention, the step of rigidly connecting one vehicle to the other vehicle may comprise the step of connecting the rear end of one vehicle to the rear end of the other vehicle.

According to the second aspect of the present invention, the second and/or the third destination is a location with access limited to personal mobility vehicles.

According to the second aspect of the present invention, reaching a second or a third destination may include turning the vehicle within a circle of 2 meters in diameter or less.

Preferably, reaching a second or a third destination may include turning the vehicle within a circle of 1.5, one and a half, meters in diameter or less. This allows the vehicle to substantially turn on itself, in a similar manner to a wheelchair, for example, thereby allowing the vehicle to turn in walkways, corridors, halls, etc, which is particularly advantageous in the so called last mile delivery.

According to the second aspect of the present invention, the aggregated vehicle and/or any of the vehicles may operate autonomously and/or under human control.

According to the second aspect of the present invention, one of the vehicles may travel a fourth distance and the other travels a fifth distance, until reaching a meeting point where they rigidly connect to one another. Thereafter, the vehicles, once in a combined configuration, preferably travel to a fourth destination. Said fourth destination may be the same as the place of origin, i.e. the place where the vehicles first rigidly connect to form the aggregated vehicle, or a different location.

According to the second aspect of the present invention, the method may further comprise the step of determining location of the vehicles, either in standalone or combined configuration, and adjusting the power output of the at least one motor of each vehicle and the maximum speed of the vehicles to the regulations applicable to their location.

In the present document the words motor and engine are considered synonyms and are used interchangeably.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a schematic side view of a first exemplary embodiment of a transport system according to the present invention, in a combined configuration.
FIG. 2 shows a schematic side view of the first exemplary embodiment shown in FIG. 1, in a standalone configuration.
FIG. 3 shows a schematic side view of a second exemplary embodiment of a transport system according to the present invention, in a combined configuration.
FIG. 4 shows a schematic side view of the second exemplary embodiment shown in FIG. 3, in a standalone configuration.
FIG. 5 shows a schematic top view of a third exemplary embodiment of a transport system according to the present invention, in a combined configuration.
FIG. 6 shows a schematic top view of a vehicle of the third exemplary embodiment shown in FIG. 5, in a standalone configuration.
FIG. 7 shows a schematic top view of a fourth exemplary embodiment of a transport system according to the present invention, in a combined configuration.
FIG: 8 shows a schematic side view of a fifth exemplary embodiment of a transport system according to the present invention, in a standalone configuration.
FIG. 9 shows a schematic top view of a vehicle of the fifth exemplary embodiment shown in FIG. 8, in a standalone configuration.
FIG. 10 shows a schematic side view of a sixth exemplary embodiment of a transport system according to the present invention, in a combined configuration.
FIG. 11 shows a schematic side view of a seventh exemplary embodiment of a transport system according to the present invention, in a combined configuration.
FIG. 12 shows a schematic front view of the seventh exemplary embodiment shown in FIG. 11.
FIG. 13 shows a schematic top view of a vehicle of the seventh exemplary embodiment shown in FIGS. 11 and 12, in a standalone configuration, turning on itself.
FIG. 14 shows a schematic top view of the vehicle of the seventh exemplary embodiment shown in FIG. 13 performing a turn.
FIG. 15 shows a schematic side view a vehicle of an eight exemplary embodiment of a transport system according to the present invention.

### Detailed Description of the Invention and of particular embodiments

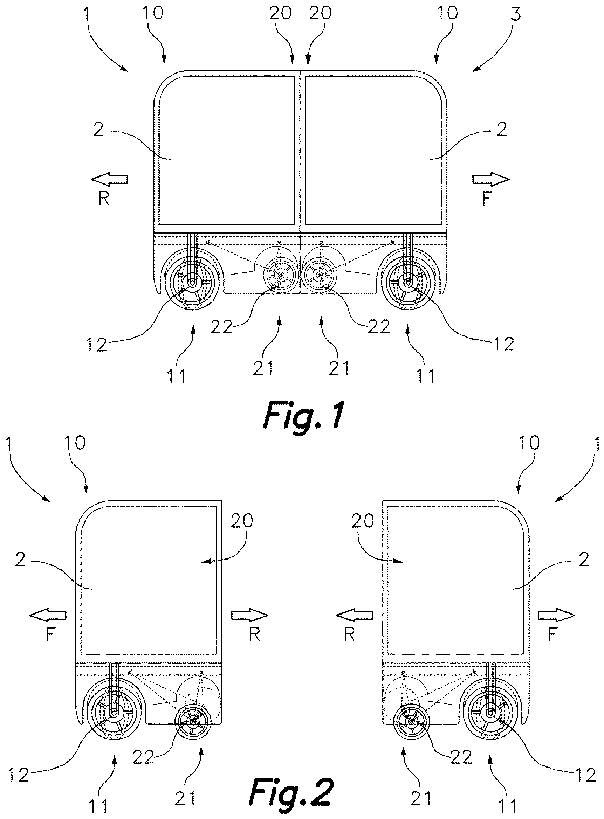

FIG. 1 shows a schematic side view of a first exemplary embodiment of a transport system according to the present invention, in a combined configuration, that is to say, with the two vehicles 2 comprised in the system 1 being rigidly connected to each other forming an aggregated vehicle 3.

In the exemplary embodiment shown, the two vehicles 2 are connected to one another by their respective rear end 20, so that the main axes 11 of the vehicles 2 are located at the distal ends of the aggregated vehicle 3, thereby increasing the wheelbase of the aggregated vehicle 3 and, thus, its stability. The increased stability due to the longer wheelbase of the aggregated vehicle 3 is especially important when travelling at high speeds, irrespective of whether the aggregated vehicle 3 is carrying goods and/or passengers. In this particular exemplary embodiment, both vehicles 2 and, consequently, also the aggregated vehicle 3, are autonomous vehicles configured to transport only cargo as they lack any area configured to accommodate passengers. As will be seen in hereinbelow, this may differ in other embodiments of the present invention, as the transport system of the present invention is not limited to transport cargo and/or to autonomous vehicles.

Although in this first exemplary embodiment the aggregated vehicle 3 is symmetric as both vehicles 2 have the same configuration, this may differ in other embodiments and the aggregated vehicle 3 may comprise vehicles 2 having different configurations that result in a non-symmetric aggregated vehicle 3, for example, the aggregated vehicle 3 can comprise one vehicle 2 being configured for carrying passengers and the other vehicle 2 being configured for carrying goods.

The first exemplary embodiment shown comprises two wheels 12 on the main axis 11 arranged on the front end 10 of the vehicles 2 and one wheel 22 on the secondary axis 21 arranged on the rear end 20 of the vehicles 2. Said one wheel 22 of the secondary axis, on each vehicle 2, is movable between an operative position in which is in contact with the ground, i.e. road, and an inoperative position in which is not in contact with the ground. Other vehicles 2 of a system 1 according to the present invention may have a different configuration than the one shown in this exemplary embodiment. For example, other embodiments can comprise two wheels 22 on the secondary axis 21 and/or the at least one wheel 22 of the secondary axis 21 may not be movable between an operative and an inoperative position.

The aggregated vehicle 3 can move in the forward moving direction F and rearward moving direction R, being equally efficient on both directions. Known vehicles are typically intended for moving in a forward moving direction, with the rearward moving direction being typically reserved for manoeuvring. It should be noted that the depicted forward and rearward moving directions F, R could also be the opposite, i.e. the depicted forward moving direction F could also be the rearward moving direction R and the depicted rearward moving direction R could also be the rearward moving direction, as both ends of the aggregated vehicle 3 can either be the front or the rear end of the aggregated vehicle 3. Moreover, when one of the vehicles moves in its forward moving direction F, the other vehicle moves in its rearward moving direction R, or vice versa. This is further illustrated in FIG. 2, which depicts a schematic side view of the first exemplary embodiment of a system 1 according to the present invention with the vehicles 2 in a standalone configuration, that is to say, with the vehicles 2 detached from each other.

In FIG. 2 the forward and rearward moving directions F, R have been depicted for each vehicle 2. Contrary to the aggregated vehicle 3 shown in FIG. 1, when the vehicles 2 operate in the standalone configuration 2 are intended for primarily move in the respective forward moving direction F, with the rearward moving direction R being intended, mainly, for manoeuvring, as in vehicles known in the art.

In the standalone configuration, the wheel 22 of the secondary axis 21 of each vehicle 2 of this first exemplary embodiment operates in the operative position. Although there are known in the art personal mobility vehicles that have a single axis and that operate using gyroscopes, such vehicles are of much smaller dimensions than the ones of the present invention. The vehicles 2 of the present invention have at least three points of contact with the ground arranged in a way that provide sufficient stability to the vehicle without the need of gyroscopes and similar devices. This can be seen hereinbelow in the various plant views of different exemplary embodiments of a transport system 1 according to the present invention.

Although optional, the front end 10 of the vehicles 2 is preferably shaped as to improve the aerodynamic performance of the vehicle 2 when moving in the forward moving direction F. The rear ends 20 of the vehicles 2 are preferably perpendicular to the longitudinal axis of the vehicle 2, in other words, perpendicular to the ground, in order to ease mating of the vehicles 2 by the corresponding docking unit in order to form an aggregated vehicle 3 as in, for example, FIG. 1.

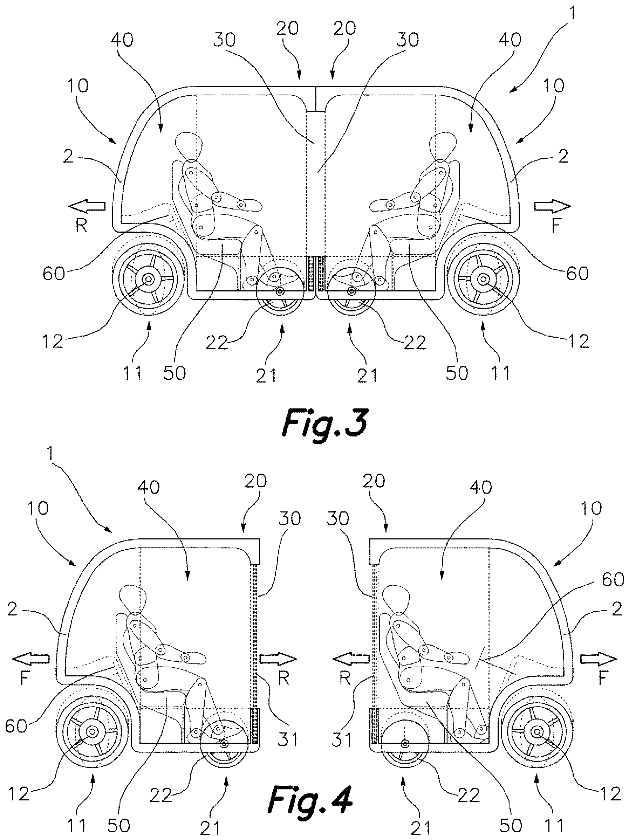

FIG. 3 shows a schematic side view of a second exemplary embodiment of a transport system 1 according to the present invention. Contrary to the first exemplary embodiment, in this second exemplary embodiment both vehicles 2 are intended for transporting passengers and their personal items, but not for transporting cargo. In particular, in the second exemplary embodiment each vehicle 2 is configured for transporting one passenger.

A further difference of this second exemplary embodiment with the first one previously shown is that the secondary axis 21 of the vehicles 2 of this second exemplary embodiment comprises two wheels 22, one at each distal end of the secondary axis 21, thereby resulting in a vehicle 2 having four wheels 12, 22.

The vehicles 2 of this second exemplary embodiment comprise, on their rear end 20 a docking opening 30 that is also equipped with a closing unit 31 of said docking opening 30 so that the inner space of the vehicles 2, in particular, cabins 40, can be combined in a single larger cabin 40 of the aggregated vehicle 3, when the vehicles 2 operate in the combined configuration and the closing unit 31 is open. However, if the passengers of each vehicle 2 desire more privacy, for example, the closing unit 31 can be kept closed, so that the aggregated vehicle 3 has two independent cabins 40.

In embodiments wherein the vehicles 2 have autonomous capabilities, i.e. the vehicles 2 are able to operate autonomously, the seats 50 may be facing rearward, so that when the vehicles 2 operate in the combined configuration the passengers face each other; may be facing forward, so that when the vehicles 2 operate in the standalone configuration the passengers face following the forward moving direction F; or may be rotatable, so that, for example, the seats 50 can face forward when travelling in a standalone configuration and face rearward when travelling in a combined configuration as an aggregated vehicle 3 so that passengers face each other.

In the exemplary embodiment shown, the vehicle 2 may be operated by a driver using a steering wheel 60 or may operate autonomously. In this exemplary embodiment, when driving the vehicle 2 the driver must face the steering wheel 60 (see FIG. 4) and when the vehicle operates autonomously and the driver becomes a passenger, can be seated according to its choice.

FIG. 4 shows a schematic side view of the second exemplary embodiment shown in FIG. 3, but in a standalone configuration. In the standalone configuration, the docking openings 30 are closed by the closing units 31 in order to provide a closed cabin 40, thereby increasing safety and allowing climatization of said cabin 40. However, it is also possible that the docking opening 30 remains open, or at least partially open, when the vehicles 2 operate in the standalone configuration.

In the standalone configuration shown in FIG. 4 the vehicle 2 depicted on the right is being driven by the driver using the steering wheel 60 and, thus, the driver is facing towards the front end 10 of the vehicle 2. In contrast, the vehicle 2 depicted on the left is being operated autonomously and, thus, the passenger is able to be seated in any direction of its choice, which in this case, is facing towards the rear end 20 of the vehicle 2.

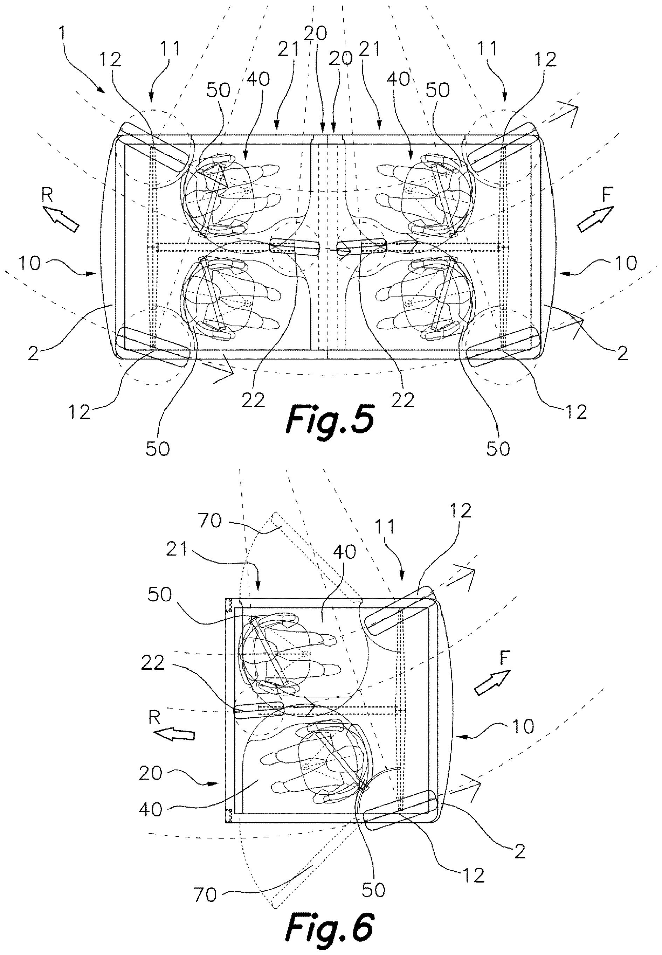

FIG. 5 shows a schematic top view of a third exemplary embodiment of a transport system 1 according to the present invention, in a combined configuration. In this exemplary embodiment, both vehicles 2 are intended for transporting passengers, as in the second exemplary embodiment shown in FIGS. 3 and 4, but each vehicle can carry a maximum of two passengers instead of one as in the second exemplary embodiment. Therefore, when operating as an aggregated vehicle 3 in the combined configuration, the aggregated vehicle 3 can carry up to four passengers. In this exemplary embodiment each passenger seats on its own rotatable seat 50.

As can be seen in great detail thanks to this schematic top view, each vehicle 2 of this third exemplary embodiment comprises a main axis 11 having two wheels 12 and a secondary axis 21 having a single wheel 22 arranged so that, together with the wheels 12 of the main axis 11, the wheels 12, 22 define a substantially isosceles triangle, thereby providing the vehicle 2 with enough stability.

In this third exemplary embodiment, all wheels 12, 22 have steering capability as illustrated by the fact that all wheels 12, 22 of both vehicles 2 are turning following a certain curvature radius. In this embodiment, the wheels 22 of the secondary axis 21 are in contact with the road, even in the combined configuration of the vehicles 3. As all wheels 12, 22 are able to turn, the aggregated vehicle 3, even if it has a wheelbase roughly twice the one of each vehicle 2, is able to have a great manoeuvrability and have a small turning circle when travelling at speeds below a certain threshold and to have a greater stability when travelling at speeds above a certain threshold. In order to increase the stability of the aggregated vehicle 3, the wheels 12, 22 on the main and on the auxiliary axis 11, 21 turn in tandem and in order to increase the manoeuvrability of the aggregated vehicle 3 the wheels 12, 22 on the main and on the auxiliary axis 11, 21 turn in opposite directions. Although this has been described in the context of an aggregated vehicle 3, it is also applicable to a vehicle 2 operating in its standalone configuration, as shown in FIG. 6 that depicts a schematic top view of a vehicle of the third exemplary embodiment shown in FIG. 5, in a standalone configuration.

In FIG. 6 there also depicted the doors 70 of the vehicle 2, which in other embodiments could also be rear hinged, also known as suicide.

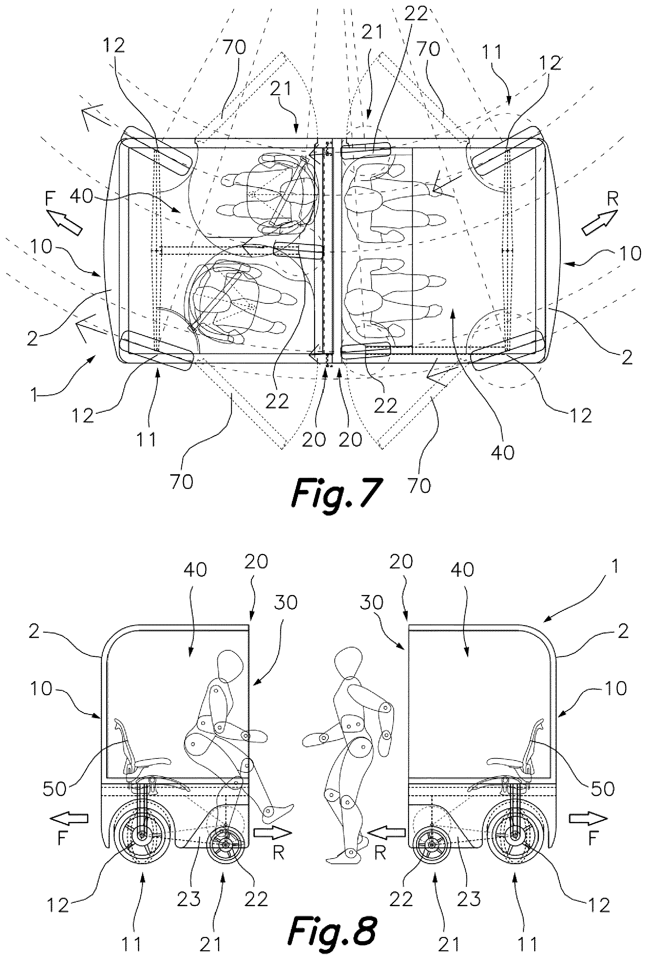

FIG. 7 shows a schematic top view of a fourth exemplary embodiment of a transport system 1 according to the present invention, in a combined configuration. In this fourth exemplary embodiment the aggregated vehicle 3 is in an asymmetric configuration, that is to say, the two vehicles 2 forming the aggregated vehicle 7 have different configurations. In particular, in this fourth exemplary embodiment the vehicle 2 depicted on the left comprises a main axis 11 with two wheels 22 and a secondary axis 21 with one wheel 22, whereas the vehicle 2 depicted on the right comprises a main axis 11 with two wheels 22, as the vehicle on the left, but comprises a secondary axis 21 with two wheels 22, so that said vehicle 2 on the right has four wheels 12, 22 in total. As in the third exemplary embodiment shown in FIGS. 5 and 6, in this fourth exemplary embodiment all wheels 12, 22 have steering capability, although it would suffice with only one of the axes 11, 21 of each vehicle 2 to have steering capability. Besides the steering capability, all wheels 12, 22 of this fourth exemplary embodiment are also powered by a motor, in particular, by a hub motor for each wheel 12, 22. In other embodiments, this arrangement may be different and only one wheel 12, 22 driven by a motor may be sufficient. For example, in the case of the vehicle 2 depicted on the left, it would be enough to drive only the wheel 22 of the secondary axis 21.

Axes 11, 21 having more than wheel 12, 22 are preferably equipped with differentials to allow wheels 12, 22 at each distal end of the corresponding axis 11, 21 to rotate at different speeds while cornering. In embodiments wherein the wheels 11, 21 are driven by hub motors, no differential may be needed as the rotation speed of each wheel 12, 22 may be controlled independently by the corresponding hub motor.

With rotatable seats 50, as in this exemplary embodiment, passengers can be seated oriented to any direction of choice if he/she is not driving.

FIG. 8 shows a schematic side view of a fifth exemplary embodiment of a transport system 1 according to the present invention, in a standalone configuration. In this fifth exemplary embodiment, each vehicle 2 comprises two wheels 12 on the main axis 11 and two wheels 22 on the secondary axis 21. Each vehicle 2 comprises a housing 23 for each wheel 22 of the secondary axis, so that when the wheel 22 moves to its inoperative position, it is housed therein. Other embodiments having a single wheel 22 on its secondary axis 21 arranged substantially at the centre of the vehicle 2 can also comprise a similar housing 23.

FIG. 8 also illustrates the possibility of entering and exiting the vehicle 2 through the docking opening 30 when the vehicles 2 are not attached to each other, i.e. when the vehicles 2 are in a standalone configuration, although use of doors 70 (not depicted in FIG. 8) is preferred. Moreover, depicting passengers also gives a sense of scale to the vehicles 2.

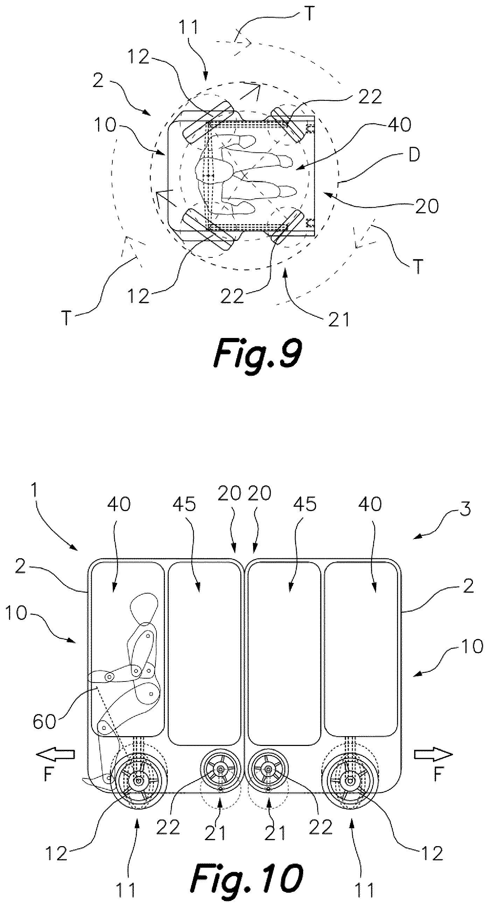

FIG. 9 shows a schematic top view of a vehicle 2 of the fifth exemplary embodiment previously shown in FIG. 8, in a standalone configuration. In FIG. 9 it is also depicted a turning diameter D of the vehicle 2 of this exemplary embodiment, which is of 1,500 mm, thereby allowing the vehicle 2 to be able to drive on routes adapted for people with reduced mobility, including indoor facilities, as it able to turn substantially similar to a wheelchair. In order to do so, all four wheels 12, 22 of the vehicle 2 have steering capability. Having such turning diameter D is advantageous for passenger transportation, in particular, for persons with reduced mobility. However, it is also advantageous for cargo transportation, as it allows the vehicle to arrive up to the door of the recipient, even if it is in an apartment building. In this regard, it should be reminded that in a great number of countries common areas of new buildings must already be adapted for wheelchair use, thereby also allowing use of a vehicle 2 as the one of the fifth exemplary embodiment.

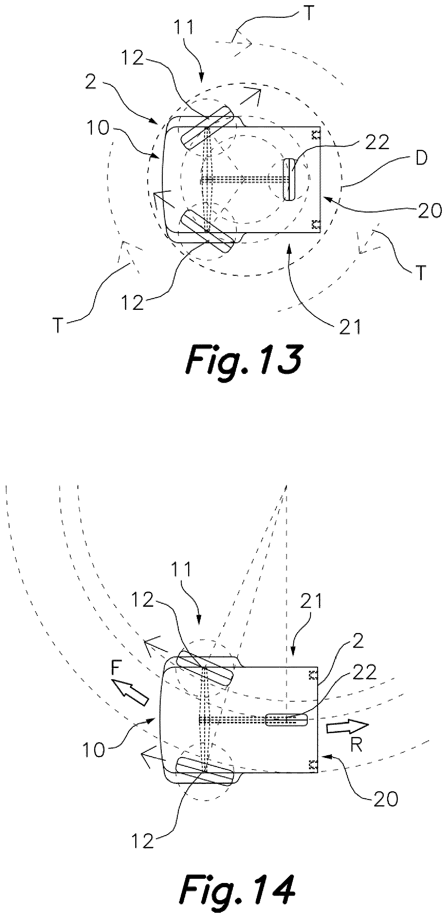

In this exemplary embodiment, only the wheels 12 of the main axis 11 are driven by a motor, although in other embodiments all wheels 12, 22 can be driven by a motor. Said motor is preferably, although not necessarily, a hub motor for each wheel 12, 22. In FIG. 13 can be seen a further embodiment having similar turning capabilities.

Arrows T represent the turning moving direction of the vehicle 2.

FIG. 10 shows a schematic side view of a sixth exemplary embodiment of a transport system 1 according to the present invention, in a combined configuration. A difference between this seventh exemplary embodiment and the ones previously described, is that in this exemplary embodiment the vehicles 2 comprise both a cargo area 45 and a cabin 40 for passengers. In this exemplary embodiment, the vehicle 2 depicted on the left is configured to be driven by a person, for example, a delivery person, whereas the vehicle on the right operates autonomously and besides carrying cargo, is also able to transport persons in a taxi like manner, for example. As in other embodiments of the present invention, other vehicles 2 having a configuration similar to the one shown in FIG. 10 may also be able to be driven by a person and operate autonomously.

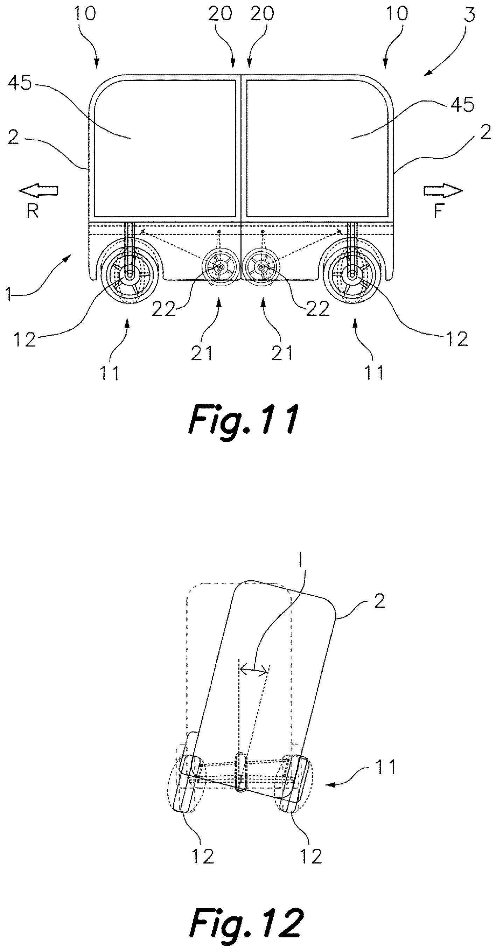

FIG. 11 shows a schematic side view of a seventh exemplary embodiment of a transport system 1 according to the present invention, in a combined configuration. In this seventh exemplary embodiment both vehicles 2 are intended exclusively for transporting cargo, as they only have a cargo area 45, and can only operate autonomously. An advantage of this exemplary embodiment is that each vehicle 2 is able to drive through corridors, walkways, etc. and even pass through doors, so that it is able to arrive to the door of the recipient when operating in the standalone configuration. At the same time, when the vehicles 2 operate in the combined configuration forming the aggregated vehicle 3 shown in FIG. 11, they are able to efficiently travel to and from the corresponding logistic centre, even driving on high-speed roads.

FIG. 12 shows a schematic front view of the seventh exemplary embodiment shown in FIG. 11. In particular, FIG. 12 shows that, this exemplary embodiment, is configured to tilt laterally following a tilting movement I. This applies to when the vehicles 2 operate in the combined configuration as an aggregated vehicle 3 as shown in FIGS. 11 and 12 and to when the vehicles 2 operate in the standalone configuration. By tilting while turning, the stability of the vehicle increases, allowing higher cornering speeds. A further advantage is that the vehicle 2 is able to tilt towards the recipient, or passenger in embodiments intended for the transport of persons, making it easier to pick up the parcel, or to enter or exit the vehicle 2, as the case may be.

In order to be able to tilt, each vehicle 2 comprises an active suspension system, hydraulic and/or pneumatic, with a geometry that allows the vehicle 2 to tilt sideways. Said active suspension system, allow the vehicle 2 to tilt towards one of the sides thereof and to return to a position wherein the vehicle 2 is substantially perpendicular to the ground following a tilting movement I. This can be repeated to either side of the vehicle 2 depending on the needs.

In conclusion, the seventh exemplary embodiment shown in FIGS. 11 and 12 is able to increase its stability by increasing its wheelbase when the vehicles 2 operate as an aggregated vehicle 3 and by tilting during turning, thereby allowing higher speeds in a safe and stable manner, even when the vehicles 2 are fully loaded.

Although the tilting mechanism has only been described in the context of the seventh exemplary embodiment, it is also applicable to any other embodiment falling within the scope of the present invention.

FIG. 13 shows a schematic top view of a vehicle 2 of the seventh exemplary embodiment previously shown in FIGS. 11 and 12, in a standalone configuration, turning on itself following a turning moving direction T. In this exemplary embodiment, the main axis 11 comprises two wheels 12 and the secondary axis 21 comprises a single wheel 22. All of said wheels 12, 22 have steering capability, but only the wheels 12 of the main axis 11 are powered. The wheel 22 of the secondary axis is simply a driven wheel. As the fifth exemplary embodiment previously shown, this seventh exemplary embodiment is able to turn on itself within a circle of a turning diameter D of 1,500 mm, thus allowing the vehicle 2 to circulate on adapted itineraries, and thus reaching the door of the recipient, even inside a building.

It is to be understood that the aggregated vehicle 3 (see FIG. 11) is also able to turn on itself by turning and driving the wheels 12 of the main axes 11 located at the distal ends of the vehicle
FIG. 14 shows a schematic top view of the vehicle 2 of the seventh exemplary embodiment shown in FIG. 13 performing a turn at a relatively low speed, for example, 20 km/h, in a semi-pedestrian area. As can be seen, the orientation of the wheels 12, 22 is different when performing a turn of a certain radius than when the vehicle 2 turns on itself, as shown in FIG. 13.

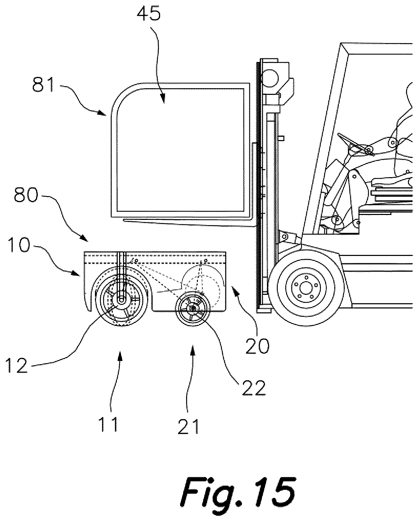

FIG. 15 shows a schematic side view of a vehicle 2 of an eighth exemplary embodiment of a transport system 1 according to the present invention. The vehicle 2 shown comprises a base 80 and a removable module 81 for being attached to said base 80. The removable module 81 can be removed from the base 80, or fixed to it, by using a forklift, as shown, or any other suitable means.

The base 80 of the vehicle 2 shown comprises the main axis 11, the secondary axis 21, the at least one motor for powering the vehicle 2, the energy source for said at least one motor, the docking unit and the control unit of the vehicle. However, in other embodiments the control unit may be comprises in the removable module 1 or even both the base 80 and the removable module 81 can comprise respective control units that operate in a coordinated manner when the module 81 is attached to the base 80.

The removable module 81 can comprise the cargo area and/or the passenger area of the vehicle 2. In the case shown, the removable module 81 comprises a cargo area 45. By replacing the removable module 81 it is possible to change the configuration of the vehicle 2, that is to say, for example, the vehicle 2 can be configured for transporting passengers and after replacing the removable module 81, can be configured for transporting cargo. In configurations of the vehicle 2 for transporting cargo, it is also possible to, easily and rapidly, replace a removable module 81 comprising an empty cargo area 45 with another module 81 comprising a previously loaded cargo area 45, thereby reducing the loading time of the vehicle 2 and thus, increasing its efficiency, among other benefits.

Although in FIG. 15 only one of the vehicles 2 of the system 1 has been represented, it is to be understood that the eighth exemplary embodiment also comprises a second vehicle 2. Said second vehicle 2 can have a base 80 and a removable module 81 as shown in FIG. 15 or may have a configuration without said base 80 and removable module 81, that is to say, a configuration according to the ones previously shown in FIS. 1 to 14.

A vehicle 2 according to the present invention can comprise a positioning unit for locating the vehicle 2. Said positioning unit is operatively connected to a control unit of the vehicle 2 and to the power electronics of the at least one motor, so that the control unit is able to adapt at least the power output of said at least one motor and the maximum speed of the vehicle 2 according to the regulations applicable to the location of the vehicle 2. This is particularly advantageous in locations wherein the use of vehicles is restricted to a certain maximum power, in addition to the more usual speed limits, thereby allowing the vehicle 3 to drive in said restricted areas and return to its nominal power once it exists such restricted areas. This is also applicable when two vehicles 2 operate in a combined configuration as an aggregated vehicle 3.

Although the vehicles 2 of the system 1 object of the present invention can use any kind of motor, including internal combustion engines, electric motors are preferably used as they are more compact than internal combustion engines and emit no emissions. Said electric motors can be powered by an electric battery or by a fuel cell, for example. In embodiments using electric motors powered by at least one electric battery, the control units of each vehicle 2 may be configured to, in the combined configuration of the vehicles 2 as an aggregated vehicle 3, determine the battery level of each vehicle 2 and transfer energy from the battery of one vehicle to the battery of the other, thereby allowing charging the battery of one of the vehicles using energy stored in the battery of the other vehicle. Although it is usually the most depleted battery that is charged, it is also possible, for example, to charge the battery of the vehicle that will travel further, thereby increasing its range.

Although it is not depicted in any of the exemplary embodiments shown above, the vehicles 2 of the system 1 according to the present invention can also comprise a removable structure for supporting cargo and increasing the load capacity of the vehicle, similarly to the use of roof racks in vehicles known in the art.

Even if doors 70 are not depicted in some of the exemplary embodiments illustrated above, it should be understood that this has been done with illustrative purposes and that the vehicles configured for carrying passengers preferably have doors 70 for allowing passengers to entry and to exit the cabin 40. Although it is not preferred, passengers can also enter and exit the cabin 40 through the docking opening 30 when the vehicles 2 are in the standalone configuration, as illustrated in FIG. 8.

Unless otherwise provided, features described in relation to a certain exemplary embodiment are also applicable to other embodiments of the present invention and can be freely combined unless otherwise explicitly stated.

Any of the subject matter disclosed above is subject to be subsequently prosecuted in a divisional application.

## Claims

1. Transport system (1) comprising two vehicles (2), wherein each vehicle (2) comprises:
- A front end (10) having a main axis (11) and a rear end (20) having a secondary axis (21) of the vehicle (2), the main axis (11) comprising two wheels (12) and the secondary axis (21) comprising at least one wheel (22); the vehicle having a forward moving direction (F) and a rearward moving direction (R);
- at least one of the wheels (12, 22) of the vehicle being powered by at least one motor; at least the wheels (12, 22) of the main or of the secondary axes (11, 12) having steering capability;
- An energy source for powering the at least one motor;
- A passenger and/or a cargo area;
- A control unit for controlling the vehicle (2), and being configured to adapt the power output of the at least one motor and the maximum speed of the vehicle (2);
- A docking unit for being connected to a docking unit of another vehicle (2) of the transport system (1);
wherein the vehicles (2) are configured to operate in a standalone configuration, in which each vehicle (2) operates independently from the other one, and in a combined configuration, in which the vehicles (2) are rigidly connected to each other, thereby forming an aggregated vehicle (3), by respective docking units so that the main axes (11) of the connected vehicles (2) are arranged at distal ends of the aggregated vehicle (3);
in the combined configuration one of the vehicles (2) being configured to move in a forward movement direction (F) and the other vehicle (2) being configured to move in a rearward movement direction (R), the control units of the vehicles (2) being configured to operate them synchronously; and
the control units of the vehicles (2) being configured to adapt the power outputs and maximum speed of the vehicles (2) depending on whether the vehicles (2) operate in the standalone or in the combined configuration.

2. Transport system (1), according to claim 1, wherein the wheels (12, 22) of the main and secondary axes (11, 21) have steering capability.

3. Transport system (1), according to claim 1 or 2, wherein each vehicle (2) comprises a docking opening (30) on its rear end (20) and a closing unit (31) for closing said docking opening (30) when the vehicle (2) is the standalone configuration and opening said docking opening (30) when the vehicles (2) are in the combined configuration thereby creating a single inner space of the aggregated vehicle (3).

4. Transport system (1), according to any preceding claim, wherein each vehicle (2) further comprises a positioning unit for locating the vehicle (2), said positioning unit being operatively connected to the control unit of the vehicle (2), said control unit being configured to adapt at least the power output of the at least one motor and the maximum speed of the vehicle (2) according to the regulations applicable to the location of the system (1).

5. Transport system (1), according to any preceding claim, wherein at least each wheel (12) of the main axis (11) comprises a hub motor.

6. Transport system (1), according to any preceding claim, wherein the energy source of each vehicle (2) is an electric battery, and the control units of each vehicle (2) are configured to, in the combined configuration of the vehicles (2), determine the battery level of the battery of each vehicle (2), and transfer energy from the battery of one vehicle (2) to the battery of the other vehicle (2).

7. Transport system (1), according to any preceding claim, wherein the at least one wheel (22) of the secondary axis (21) is movable between an operative position in which is in contact with the ground and an inoperative position in which it is not in contact with the ground.

8. Transport system (1), according to claim 7, wherein the at least one wheel (22) of the secondary axis (21) is configured to operate in its inoperative position when the vehicles (2) operate in the combined configuration and to operate in its operative position when the vehicles operate in the standalone configuration.

9. Transport system (1), according to any preceding claim, wherein each vehicle (2) comprises a suspension system configured to allow tilting of the vehicles in the standalone and/or in the combined configuration.

10. Method for transporting cargo and/or passengers, the method comprising the steps of:
- Providing two vehicles (2) of a transport system (1) according to any one of claims 1 to 9;
- Rigidly connecting one vehicle (2) to the other vehicle (2) so that they form an aggregated vehicle (3) and operate in a combined configuration with the main axes (11) of the vehicles being arranged at distal ends of the aggregated vehicle (3);
- Adjusting at least the power output of the electric motors of the vehicles and their maximum speed to the combined configuration;
- Travelling a first distance with the vehicles (2) in the combined configuration so that one of the vehicles (2) travels in a forward movement direction (F) and the other vehicle (2) travels in a rearward movement direction (R);
- Reaching a first destination;
- Disconnecting one vehicle (2) from the other one;
- Adjusting at least the power output of the electric motors of the vehicles (2) and their maximum speed to their standalone configuration;
- Travelling a second distance with one vehicle (2) and a third distance with the other vehicle (2);
- Reaching a second destination with one vehicle (2) and a third destination with the other vehicle (2).

11. Method, according to claim 10, wherein the step of rigidly connecting one vehicle (2) to the other vehicle (2) comprises the step of connecting the rear end (20) of one vehicle to the rear end (20) of the other vehicle.

12. Method, according to claim 10 or 11, wherein reaching a second or a third destination includes turning the vehicle (2) within a circle of 2 meters in diameter or less.

13. Method, according to any claim 10 to 12, wherein the aggregated vehicle (3) and/or any of the vehicles (2) operate autonomously and/or under human control.

14. Method, according to any claim 10 to 13, wherein one of the vehicles (2) travels a fourth distance and the other travels a fifth distance, until reaching a meeting point where they rigidly connect to one another.

15. Method, according to any claim 10 to 14, further comprising the step of determining location of the vehicles (2), either in standalone or combined configuration, and adjusting the power output of the at least one motor of each vehicle (2) and the maximum speed of the vehicles (2) to the regulations applicable to their location.
